# DEMANDE DE BREVET EUROPEEN

(11) **EP 3 627 353 A1**
(43) Date de publication de la demande: **25.03.2020**
(21) Numéro de dépôt: 19208152.9
(22) Date de dépôt: 19.03.2012
(51) Int. Cl.: G06F 16/54, G06F 16/583, G06F 16/58

(54) **PROCÉDÉ POUR AFFINER LES RÉSULTATS D'UNE RECHERCHE DANS UNE BASE DE DONNÉES**

(30) Priorité: 23.03.2011 FR 1152383
(62) Demande divisionnaire de: 12714812.0
(71) Demandeur: Qwant, 75116 Paris (FR)
(72) Inventeur: MATHIEU, Eric, 75011 Paris (FR); MARCH, Cyril, 76300 Sotteville les Rouens (FR)
(74) Mandataire: Cornuejols, Marine Sophie

(57) **Abrégé**

La présente invention se rapporte à un procédé pour affiner les résultats d'une recherche d'objets dans une base de données dans laquelle les objets sont chacun à des descripteurs, comprenant les étapes visant à :
- présenter à un utilisateur un ensemble d'objets associés à un moyen pour l'utilisateur de signaler sa pertinence et/ou sa non pertinence par rapport à sa recherche,
- en fonction des signalements, affecter au moins un poids aux descripteurs d'un objet présenté considéré par l'utilisateur comme étant pertinent et/ou non pertinent,
- calculer une résultante des poids associés à chaque descripteur de l'ensemble des objets,
- initialiser un indice de pertinence pour chaque objet,
- confronter chaque objet, et pour chaque descripteur de l'objet confronté, modifier l'indice de pertinence en fonction du poids de ce descripteur dans la résultante,
- présenter les objets résultats dans l'ordre de leur indice de pertinence.

## Description

La présente invention se rapporte à un procédé permettant d'affiner les résultats d'une recherche dans une base de données contenant un ensemble d'objets liés chacun à au moins un descripteur.

Le développement des technologies numériques ces dernières années, accompagné du développement des réseaux et de l'Internet a conduit à une augmentation extrêmement importante de la quantité de contenus numériques disponibles.

Un exemple particulièrement significatif en est le développement de la photo numérique, notamment en raison du développement de sites de mise en ligne et de partage de photos. Ainsi, l'un des leaders de ce type de sites a depuis septembre 2010 dépassé les cinq milliards de photos mises en ligne et continue à en mettre en ligne plusieurs milliers par jour.

Ces objets numériques sont généralement répertoriés dans des bases de données en association avec des mots clés et/ou d'autres descripteurs techniques (taille, résolution, etc.). Ces mots clés et descripteurs permettent d'effectuer des recherches dans la base de données et de retourner les objets dont les mots clés correspondent aux critères de recherche entrés par un utilisateur dans un champ de recherche.

Cependant, actuellement, la plupart des moteurs de recherche sont principalement conçus pour rechercher du texte à l'intérieur de pages Internet ou de fichiers, et notamment dans des textes de description associés.

Dans le cas où les objets stockés ne sont pas de nature textuelle, comme par exemple des photos, les mots clés et descripteurs associés prennent une importance considérable pour permettre d'effectuer une recherche efficace et retourner un résultat pertinent.

De nombreux moteurs de recherche existent pour effectuer de telles recherches, et de nombreux algorithmes ont été développés afin d'optimiser la pertinence des résultats de ces recherches.

Malgré des algorithmes perfectionnés, une recherche par mot clé possède des limites intrinsèques, notamment par exemple à cause de l'existence dans le langage humain de synonymes, d'homonymes, de hiérarchie dans les termes, de degré de précision.

En raison de ces limites, l'intention de recherche précise de l'utilisateur au-delà du sens premier des mots clés utilisés reste inconnue au moteur de recherche.

Afin de pallier ces limites, la plupart des moteurs de recherche permettent aux utilisateurs d'effectuer une recherche avancée, notamment en utilisant plusieurs mots clés combinés entre eux par des opérateurs logiques.

Un tel mode de recherche n'est cependant pas particulièrement aisé pour l'utilisateur et peut, sur certains moteurs, aller jusqu'à nécessiter des compétences de quasi programmation pour écrire une requête, tout en ne sachant pas si cette requête pourra être correctement interprétée par le moteur et conduira au résultat souhaité.

Ainsi, il existe un besoin justifiant la mise au point d'un procédé permettant d'optimiser les recherches d'objets contenus dans une base de données et notamment de pallier certaines ambigüités ou imprécisions pour mieux répondre à la requête de l'utilisateur.

Pour ce faire, la présente invention se rapporte à un procédé pour affiner les résultats d'une recherche d'objets dans au moins une base de données contenant au moins un ensemble d'objets associés chacun à au moins un descripteur, ledit procédé comprenant les étapes visant à :
- présenter à un utilisateur tout ou partie d'un ensemble d'objets de la base de données, au moins une partie des objets présentés étant chacun associés à au moins un moyen pour un utilisateur de signaler la pertinence et/ou au moins un moyen pour l'utilisateur de signaler la non pertinence dudit objet par rapport à sa recherche,
- en fonction des signalements de l'utilisateur, affecter au moins un poids à tout ou partie des descripteurs d'un objet de l'ensemble des objets présentés considéré par l'utilisateur comme étant pertinent et/ou non pertinent par rapport à sa recherche,
- calculer une résultante des poids associés à chaque descripteur de l'ensemble des objets résultats,
- initialiser un indice de pertinence pour chaque objet résultat,
- confronter chaque objet résultat à la résultante, et pour chaque descripteur de l'objet résultat confronté, augmenter ou diminuer l'indice de pertinence de l'objet en fonction du poids de ce descripteur dans la résultante,
- présenter à l'utilisateur tout ou partie des objets résultats dans l'ordre de leur indice de pertinence calculé.

Ainsi, en permettant à l'utilisateur de signaler directement les résultats d'une recherche initiale qu'il trouve pertinents ou non pertinents, il est possible de mieux prendre en compte le sens réel de sa recherche et de lui fournir un résultat plus satisfaisant. Par ailleurs, grâce à une telle méthode, il est aisé pour l'utilisateur d'effectuer une recherche complexe ajoutant ou retirant des descripteurs et mots-clés et ce, de manière intuitive et transparente.

Par objet, on entend tout objet numérique pouvant être stocké dans une base de données. Comme énoncé précédemment, il pourra notamment s'agir de photos, mais également de fichiers audio, vidéo, documents, etc.

Il convient de noter que, conformément au principe de fonctionnement d'une base de données, les objets référencés ne sont pas nécessairement contenus directement eux-mêmes dans un enregistrement de la base de données et peuvent tout à fait être référencés par l'intermédiaire de leur adresse de stockage ou URL, par exemple, ou tout autre moyen indirect.

Il convient également de noter que le terme descripteur utilisé n'est pas limité. Le terme descripteur comprend bien évidemment des descripteurs de type mots clés, mais il peut également s'agir de descripteurs plus techniques référençant les textures, matières, profils de couleurs, définition, etc. Il peut également s'agir de descripteurs sémantiques établis à partir d'un thésaurus. La nature des descripteurs n'est généralement pas limitée et ceux-ci peuvent être adaptés en fonction des objets référencés dans la ou les bases de données, et recherchés.

On notera également que des pondérations différentes peuvent être affectées à différents descripteurs, notamment en fonction de leur origine, contexte, situation par rapport à l'ensemble des autres descripteurs. Ainsi, par exemple, les descripteurs provenant d'un thésaurus, et donc présentant un caractère standardisé, uniforme et structuré pourront avoir plus de poids que des descripteurs de type mots clés qui auraient été attribués par les utilisateurs eux-mêmes d'un site de photo.

Plusieurs effets avantageux inattendus et surprenants ont été constatés. Il est notamment apparu que le procédé selon l'invention permettait à l'utilisateur de s'affranchir dans une certaine mesure de la langue des descripteurs textuels utilisés. En effet, à partir d'une recherche initiale dans sa langue, l'utilisateur utilisant le procédé selon l'invention pour affiner les résultats de la recherche peut également donner du poids de manière transparente à des descripteurs et mots clés en langue étrangère associés à l'objet. La recherche pourra donc au final se trouver affinée sur la base de mots clés en langue étrangère, ou au moins en les prenant en compte, langue étrangère que l'utilisateur ne comprend pas nécessairement et qu'il n'aurait donc pas entré directement dans un moteur de recherche textuel.

Selon un mode de réalisation préféré, l'ensemble d'objets présentés initialement à l'utilisateur correspond à tout ou partie des objets résultant d'une première recherche, notamment par mot clé, dans la ou les bases de données. Bien évidemment, tous les modes de recherche initiale permettant de générer un premier ensemble d'objets sont possibles. Outre une recherche classique utilisant un champ texte et une entrée de mots par l'utilisateur, on peut imaginer une sélection d'objets directement à partir de coordonnées géographiques sur une carte, ou encore une première photo qui serait, par exemple, analysée pour en extraire des paramètres de recherches, etc.

En fonction du nombre d'objets retournés par cette recherche initiale, on pourra choisir de ne présenter à l'utilisateur qu'une partie des résultats, par exemple les dix mille premières photos d'une recherche par mots-clés dans une base de données de photos.

Il convient également de préciser que la recherche dans la ou les bases de données peut être effectuée dans une base de données interne, mais également sur des bases de données externes hébergées sur des sites distants spécialisés par exemple.

On pourrait également choisir de ne pas procéder à une première recherche par mots clés et de présenter à l'utilisateur un ensemble d'objets types représentatifs de grandes catégories de la base de données, par exemple. Libre ensuite à l'utilisateur de naviguer dans la base de données en affinant successivement ses sélections à l'aide de la méthode objet de la présente invention.

De manière préférentielle, les objets de l'ensemble d'objets présenté initialement à l'utilisateur sont présentés dans un ordre défini lors de l'obtention dudit ensemble d'objets, notamment un ordre de pertinence par rapport à la recherche initiale, cette pertinence pouvant notamment être définie par un algorithme de recherche. En effet, les moteurs de recherche traditionnels associent fréquemment un indice de pertinence aux résultats de leurs recherches.

Alternativement ou de manière complémentaire, l'ordre de pertinence et de présentation initial pourra être défini de manière ad hoc afin de, par exemple, maximiser le nombre d'objets différents présentés initialement afin de laisser le plus grand choix possible à l'utilisateur pour son premier affinage, et éventuellement pour les suivants.

Selon un mode de réalisation préféré, les poids affectés aux descripteurs des objets considérés comme non pertinents est de signe opposé aux poids affectés aux descripteurs des objets considérés comme pertinents, et plus particulièrement de signes respectivement négatif et positif.

Bien évidemment, il s'agit simplement d'une échelle de notation donnée à titre d'exemple, le point de référence n'étant pas nécessairement zéro, d'autres points de référence pouvant être choisis sans difficulté et constituant simplement un décalage de l'échelle. Dans ce cas, on considérera les termes « signe opposé », « positif » et « négatif » comme devant être compris par rapport à ce point de référence.

Selon une première variante, les valeurs absolues des poids affectés aux descripteurs des objets considérés comme pertinents et/ou non pertinents sont égales.

Selon une deuxième variante, le poids affecté aux descripteurs des objets considérés comme pertinents a une valeur absolue différente, et notamment plus élevée, que celle du poids affecté aux descripteurs des objets considérés comme non pertinents.

Avantageusement, les valeurs des poids affectés aux descripteurs des objets considérés comme pertinents et/ou non pertinents peuvent être différentes pour chaque objet signalé.

Avantageusement encore, la valeur du poids affecté aux descripteurs des objets considérés comme pertinente et/ou non pertinents est fonction de leur ordre de priorité initial. On pourra notamment appliquer un coefficient à une valeur de poids standard. Par exemple, un objet considéré comme pertinent à 90 % par le moteur de recherche ayant effectué la recherche initiale pourra se voir attribuer 90 % de la valeur de poids de référence si cet objet est considéré comme pertinent par l'utilisateur. En revanche, si l'utilisateur le considère comme non pertinent, contrairement au moteur de recherche, on pourra choisir de n'y affecter que 10 % de la valeur de référence du poids non pertinent.

Selon un mode de réalisation avantageux, les moyens pour signaler la pertinence et/ou la non pertinence d'un objet présenté comprennent des moyens aptes à signaler différents degrés de pertinence et/ou de non pertinence permettant notamment d'affecter un poids différent en fonction du degré de pertinence et/ou non pertinence signalé. Ainsi, on pourra notamment prévoir une page Internet comprenant des boutons permettant de signaler qu'un objet est, par exemple, « très pertinent » (premier degré), « pertinent » (deuxième degré), « peu pertinent » (troisième degré), « pas pertinent » (quatrième degré) et « hors sujet » (cinquième degré).

De manière avantageuse, les objets résultats sont présentés sous forme d'aperçus, de miniatures et/ou d'extraits.

Selon un mode particulier de réalisation, les objets contenus dans la base de données comprennent des photos et/ou des vidéos et/ou des objets audio. Il pourra également s'agir d'autres types de documents, fichiers textes, etc.

Selon une première variante de réalisation, l'indice de pertinence est initialisé à une valeur identique pour chaque objet résultats, notamment zéro.

Selon une deuxième variante de réalisation, l'indice de pertinence est initialisé à des valeurs différentes pour tout ou partie des objets résultats, notamment en fonction de l'ordre de présentation initial et le cas échéant d'une valeur de pertinence retournée par la recherche initiale.

Selon un mode de réalisation plus avancé, tout ou partie des descripteurs des objets les plus pertinents retournés alimentent une nouvelle recherche dans la base de données.

La présente invention sera mieux comprise à la lumière de la description détaillée qui suit en regard du dessin annexé dans lequel :
- la figure 1 est une capture d'écran d'un site Internet mettant en oeuvre le procédé selon l'invention au niveau de la première étape présentant à un utilisateur les résultats d'une recherche initiale par mot-clé,
- la figure 2 est une capture d'écran du site de la figure 1 sur lequel un utilisateur a signalé une photo qu'il considère comme pertinente à sa recherche,
- la figure 3 est une capture d'écran du site de la figure 1 sur lequel un utilisateur a signalé une photo qu'il considère comme non pertinente à sa recherche,
- la figure 4 est une capture d'écran après déclenchement de l'étape d'affinage de la recherche par l'utilisateur,
- la figure 5 est une capture d'écran du site de la figure 1 montrant le résultat de l'étape d'affinage réalisée en fonction des signalements de pertinence et non pertinence par l'utilisateur,
- la figure 6 est un logigramme représentant schématiquement le déroulement du procédé illustré sur les figures 1 à 5.

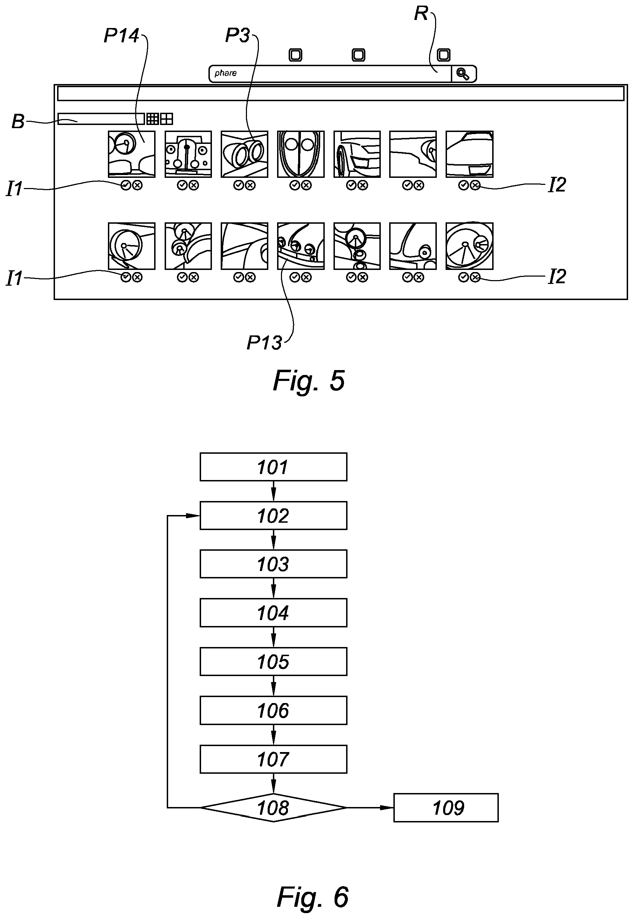

En se référant également à la figure 6, les figures 1 à 5 montrent des captures d'écrans d'un site Internet mettant en oeuvre le procédé selon l'invention sur une recherche de photos de phares de voiture.

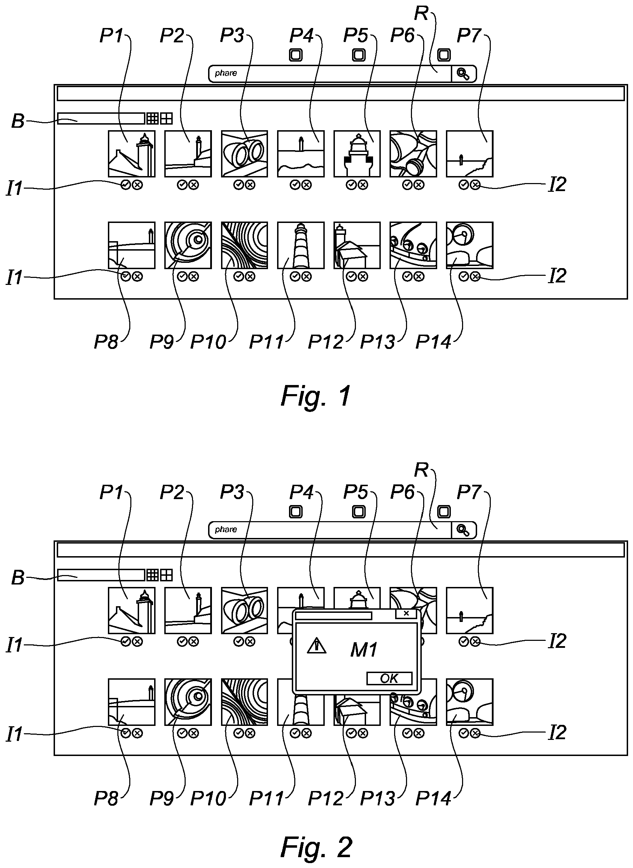

La figure 1 montre une première étape 101 dans laquelle un ensemble de miniatures de photos P1 à P14 est présenté à l'utilisateur.

Cet ensemble de photos P1 à P14 a été obtenu par l'intermédiaire d'une recherche initiale par mot clé dans une ou plusieurs bases de données de photos.

En l'espèce, le mot clé « phare » a été utilisé par l'utilisateur pour définir sa recherche et tapé dans un champ de recherche R de la page.

Le champ de recherche R sert d'interface avec l'utilisateur et alimente un moteur de recherche, interne ou externe au site, dans des bases de données de photos. De telles bases de données répertorient un grand nombre de photos et y associent des descripteurs aux fins de recherches ultérieures. Ces descripteurs sont notamment des listes de mots clés, mais peuvent également être des paramètres propres à la photo (appareil photo utilisé, données techniques, profil de couleurs, etc.).

On comprend aisément que l'utilisation d'un seul mot clé « phare » est naturellement source d'ambiguïté et porteuse de différents sens que le moteur de recherche ne pourra résoudre.

Le moteur de recherche renvoie donc les résultats de son algorithme de recherche et les présente à l'utilisateur sous la forme des quatorze miniatures de photos P1 à P14.

Il convient de noter que les quatorze photos présentées à l'utilisateur ne correspondent pas nécessairement à la totalité des résultats de la recherche initiale et il est tout à fait possible de choisir de ne présenter à l'utilisateur qu'une partie des résultats, par exemple les mille premières photos retournées.

Comme visible sur la figure 1, les photos P1, P2, P4, P5, P7, P8, P9, P11, P12 se rapportent à des photos de phares côtiers pour la navigation.

Les photos P3, P6, P10, P13, P14, quant à elles, se rapportent à des photos de phares de voitures.

Chaque photo est associée, dans sa base de données ou dans une autre base, avec un ou plusieurs descripteurs.

Pour les besoins de l'exemple, nous considérerons que les photos P1, P2, P4, P5, P7, P8, P9, P11, P12 sont associées à un descripteur mot-clé « phare », et que les photos P3, P6, P10, P13, P14 sont associées chacune à deux descripteurs « phare » et « voiture ».

Conformément au procédé selon l'invention, les photos P1 à P14 sont chacune présentées à l'utilisateur en association avec une image I1 cliquable représentant un coche de validation et une image I2 cliquable représentant une croix d'interdiction.

Ces images cliquables sont associées à des fonctions informatiques enregistrant les choix de l'utilisateur et constituent des moyens pour ledit utilisateur de signaler la pertinence (coche) et/ou la non pertinence (croix) de chaque photo par rapport à sa recherche réelle.

Il est bien évident que les images représentant un coche et une croix sont données à titre d'exemple et que toute représentation équivalente est possible, y compris du texte cliquable informant l'utilisateur du choix dont il dispose.

L'utilisateur procède alors au cours d'une étape 102 au signalement des photos qu'il considère pertinentes et/ou non pertinentes.

La figure 2 est une capture d'écran montrant que l'utilisateur a signalé que la photo P14 était pertinente à sa recherche réelle. Un message M1 l'informe de la bonne prise en compte de son signalement par le site ou logiciel.

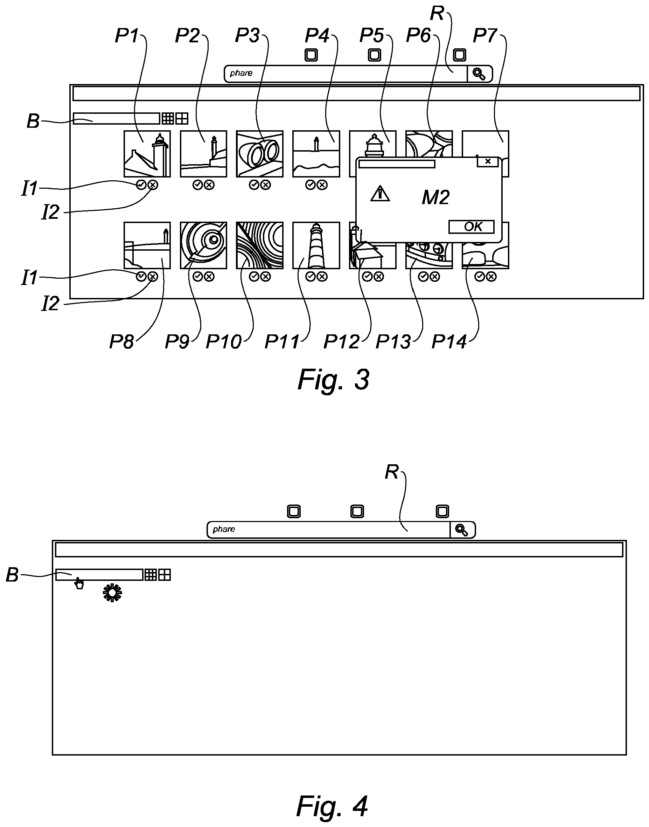

La figure 3 est une capture d'écran montrant que l'utilisateur a signalé que la photo P4 n'était pertinente à sa recherche réelle puisqu'elle représente un phare côtier. Un message M2 l'informe de la bonne prise en compte de son signalement par le site ou logiciel.

Dans le présent exemple, les messages M1 et M2 sont affichés sous la forme de « pop-up » (affichage d'une fenêtre en superposition). Il est bien évident que ces messages peuvent être signalés à l'utilisateur sous d'autres formes, notamment, par un regroupement des images sélectionnées, un affichage dans une barre latérale, une mise en place de paniers virtuels des images sélectionnées comme pertinentes et non pertinentes, etc.

Lorsque l'utilisateur a fini de sélectionner les photos qu'il considère comme étant pertinentes et/ou non pertinentes à sa recherche, il active le processus d'affinage de la recherche en cliquant, par exemple, sur un bouton B. Un exemple d'écran de traitement est représenté sur la figure 4.

Bien évidemment le processus d'affinage peut également se dérouler en temps réel en fonction des interactions de l'utilisateur, cela nécessitera toutefois plus de ressources de traitement et de charge d'un serveur distant notamment.

Les étapes de traitement sont transparentes pour l'utilisateur.

Au cours d'une étape 103, un poids P est associé à chaque descripteur associé à chaque image signalée par l'utilisateur. Le poids P est affecté d'un signe négatif si l'image a été signalée comme non pertinente et d'un signe positif si l'image a été signalée comme pertinente.

Dans l'exemple proposé, la photo P4, qui possède un descripteur « phare » associé, a été signalée non pertinente et la photo P14, qui possède deux descripteurs « phare » et « voiture » associés, a été signalée pertinente.

Ainsi, le descripteur « phare » est affecté d'un poids -P en raison de la non pertinence signalée pour la photo P4 et est affecté d'un poids +P en raison de la pertinence signalée pour la photo P14. Pareillement, le descripteur « voiture » est affecté d'un poids +P en raison de la pertinence signalée pour la photo P14.

Une résultante des poids affectés à chaque descripteur de l'ensemble d'images P1 à P14 est calculée au cours d'une étape 104.

En l'espèce, le descripteur « phare » obtient donc un poids global nul, tandis que le descripteur « voiture » obtient un poids global égal à +P.

La résultante est l'ensemble des descripteurs des photos P1 à P4 affecté de leurs poids respectifs calculés précédemment.

Avant de procéder à l'affinage et au tri des objets présentés, un indice de pertinence est associé à chaque photo P1 à P14 et initialisé à zéro lors d'une étape 105.

Chaque photo P1 à P14 possède donc la même priorité et pertinence.

Une étape 106 permet de confronter chaque photo P1 à P14 à la résultante des poids des descripteurs.

Pour ce faire, chaque descripteur de la photo P1 à P14 est comparé à la résultante, et l'indice de priorité est augmenté ou diminué du poids de ce descripteur dans ladite résultante.

Ainsi, la photo P1, montrant un phare côtier, et ne possédant que le descripteur « phare », voit son indice de priorité augmenté du poids du descripteur « phare » dans la résultante, à savoir zéro. Son indice de priorité reste donc à zéro.

Il en va de même pour la photo P2.

La photo P3 en revanche montre des phares de voiture. Comme mentionné précédemment, elle est associée à deux descripteurs « phare » et « voiture ». Pour le descripteur « phare », son indice ne change pas, puisque le poids de ce descripteur est nul. En revanche, pour son descripteur « voiture », son indice de priorité est augmenté du poids du descripteur « voiture » dans la résultante, à savoir +P. Son indice de priorité devient donc +P.

On procède de même pour les photos P4 à P14.

Il suffit donc de réorganiser les photos P1 à P14 en fonction de leur indice de priorité nouvellement calculé et de les réafficher dans l'ordre de leur indice de pertinence décroissant lors d'une étape 107 pour que les photos de phares de voiture soient affichées en premier et les phares côtiers ensuite.

La figure 5 montre une capture d'écran présentant le réarrangement final où seules des photos de phares de voiture sont bien présentées.

On constatera que la figure 5 montre également des photos qui n'étaient pas présentes sur l'écran de présentation initial. En effet, il est tout à fait possible de sélectionner un lot de photos initiales plus grand que les quatorze photos présentées, certaines photos étant alors masquées à l'utilisateur. Elles sont toutefois présentes dans la sélection initiale et prise en compte pour la mise en oeuvre du procédé. Elles reçoivent donc également un indice de pertinence qui modifie leur ordre dans la sélection. Au final, elles peuvent donc se retrouver parmi les quatorze premières photos, et donc être présentées à l'utilisateur.

Les photos initiales de phares sont, quant à elles, reléguées au-delà de la quatorzième et n'apparaissent donc plus.

Bien évidemment, l'utilisateur peut ensuite effectuer un nouvel affinage de sa recherche, notamment si de nouvelles photos lui sont présentées (étape 108) ou arrêter sa recherche (109).

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

On pourra notamment prévoir des moyens de signalisation additionnels, par exemple un bouton « neutre » en plus des moyens permettant de signaler la pertinence et/ou la non pertinence.

On pourra également prévoir un moyen de réinitialisation des poids et indice de pertinence en cas d'erreur de l'utilisateur ou s'il souhaite recommencer un affinage selon d'autres critères.

Par ailleurs bien que la présente invention ait été décrite par rapport à des photos, elle n'y est bien évidemment pas limitée et tout autre type de fichier numérique auquel des descripteurs peuvent être associés peut être utilisé pour sa mise en oeuvre. On pourra notamment mettre en oeuvre le procédé de la même manière avec des fichiers audio, notamment associés à des descripteurs quant à leur style musical, leur nature de son, leurs instruments, etc., mais également avec des fichiers vidéos, des images animées, des documents, des fichiers textes, notamment des livres anciens scannés, etc.

## Revendications

1. Procédé pour affiner les résultats d'une recherche d'objets dans au moins une base de données contenant au moins un ensemble d'objets, chaque objet étant associé à au moins un descripteur, ledit procédé étant **caractérisé en ce qu'**il comporte :
- une première étape de présentation à un utilisateur d'un ensemble d'objets de la base de données,
- une étape de signalisation, par l'utilisateur, de la pertinence ou de la non-pertinence d'au moins un objet de l'ensemble,
- en fonction des signalements de l'utilisateur et pour chaque objet signalé par l'utilisateur comme étant pertinent ou non, une étape d'affectation d'au moins un poids à au moins un descripteur dudit objet, les poids affectés aux descripteurs des objets signalés comme non pertinents étant de signe opposé aux poids affectés aux descripteurs des objets signalés comme pertinents,
- une étape de calcul d'une résultante de pondération par descripteur, en fonction du poids associé, pour ledit descripteur, pour chaque objet associé audit descripteur,
- une étape de détermination d'un vecteur dit « résultante », présentant chaque descripteur affecté de la résultante de pondération calculée,
- une étape d'initialisation d'un indice de pertinence pour chaque objet présenté,
- une étape de confrontation de chaque objet présenté à la résultante, pour chaque descripteur de l'objet confronté,
- une étape d'adaptation de l'indice de pertinence de l'objet en fonction du poids dudit descripteur dans la résultante et
- une deuxième étape de présentation à l'utilisateur l'ensemble d'objets dans l'ordre de l'indice de pertinence adapté.

2. Procédé selon la revendication 1, dans lequel l'ensemble d'objets présentés lors de la 1^{ère} étape de présentation à l'utilisateur correspond à tout ou partie des objets résultant d'une première recherche par mot clé dans au moins une base de données.

3. Procédé selon la revendication 2, dans lequel, lors de la première étape de présentation, l'ensemble d'objets est présenté selon un ordre de pertinence par rapport à la recherche initiale, l'ordre de pertinence étant défini par un algorithme de recherche.

4. Procédé selon la revendication 3, dans lequel la valeur absolue du poids affecté à chaque descripteur des objets signalés comme pertinent ou non pertinents dépend de leur ordre de pertinence lors de la première étape de présentation.

5. Procédé selon l'une des revendications 1 à 4, dans lequel la valeur absolue d'au moins un poids affecté à un descripteur pour un objet signalé comme pertinent est égal à la valeur absolue d'un poids affecté audit descripteur pour un objet signalé comme non pertinent.

6. Procédé selon l'une des revendications 1 à 4, dans lequel la valeur absolue d'au moins un poids affecté à un descripteur pour un objet signalé comme pertinent est supérieure à la valeur absolue d'un poids affecté audit descripteur pour un objet signalé comme non pertinent.

7. Procédé selon l'une quelconque des revendications 1 à 6, dans lequel l'étape de signalisation comporte une étape de définition d'un degré de pertinence ou de non pertinence, le poids affecté dépendant du degré de pertinence ou de non pertinence défini.

8. Procédé selon l'une des revendications 1 à 8, dans lequel, au cours d'au moins une étape de présentation, les objets sont présentés sous forme d'aperçus, de miniatures et/ou d'extraits.

9. Procédé selon l'une des revendications 1 à 8, dans lequel les objets contenus dans au moins une base de données comprennent des photos et/ou des vidéos et/ou des objets audio.

10. Procédé selon l'une des revendications 1 à 9, **caractérisé en ce que** l'indice de pertinence est initialisé à une valeur identique pour chaque objet présenté.

11. Procédé selon l'une des revendications 1 à 10, **caractérisé en ce que** l'indice de pertinence est initialisé à des valeurs différentes pour au moins deux objets présentés.

12. Procédé selon les revendications 3 et 11, dans lequel l'indice de pertinence est initialisé en fonction de l'ordre de présentation lors de la première étape de présentation.

13. Procédé selon les revendications 3 et, 11 ou 12, dans lequel l'indice de pertinence est initialisé en fonction de la valeur de pertinence retournée par la recherche initiale.
